(19) Europäisches Patentamt

European Patent Office

Office européen des brevets

(11) Veröffentlichungsnummer: **0 270 488 B1**

# EUROPÄISCHE PATENTSCHRIFT

(45) Veröffentlichungstag der Patentschrift: 04.12.91    (51) Int. Cl.⁵: **A21C 3/02**

(21) Anmeldenummer: 87810617.8

(22) Anmeldetag: 27.10.87

(54) **Abstreifvorrichtung für Teigauswalzmaschinen.**

(30) Priorität: 03.12.86 DE 3641323

(43) Veröffentlichungstag der Anmeldung:
08.06.88 Patentblatt 88/23

(45) Bekanntmachung des Hinweises auf die
Patenterteilung:
04.12.91 Patentblatt 91/49

(84) Benannte Vertragsstaaten:
**DE ES FR IT**

(56) Entgegenhaltungen:
**CH-A- 408 827**
**FR-A- 654 322**

(73) Patentinhaber: **SEEWER AG**
**Heimiswilstrasse 42**
**CH-3400 Burgdorf(CH)**

(72) Erfinder: **Morgenthaler, Eugen**
**Eystrasse 52**
**CH-3422 Kirchberg(CH)**

(74) Vertreter: **Tschudi, Lorenz et al**
**Bovard AG Patentanwälte VSP Optingen-**
**strasse 16**
**CH-3000 Bern 25(CH)**

**Beschreibung**

Die vorliegende Erfindung bezieht sich auf eine Abstreifvorrichtung für Teigauswalzmaschinen mit mindestens einer Federvorrichtung, welche an ihren Enden in Aktionsrichtung der Feder jeweils eine obere und eine untere Stange aufweist, die jeweils mit einem Arm eines oberen und unteren Abstreifers gelenkig verbunden ist, wobei die oberen und unteren Abstreifer jeweils ein oberes und unteres, eine Drehachse für die Abstreifer bildendes Verbindungsorgan und jeweils ein Abstreifmesser umfassen, sowie auf eine Teigauswalzmaschine mit Abstreifvorrichtungen, wobei eine um eine feste Achse drehbare untere Teigwalze und eine um eine in der Höhe verstellbare Achse drehbare obere Teigwalze vorgesehen sind.

Aus der CH-Patentschrift Nr. 408 827 ist eine derartige Abstreifvorrichtung mit einer Abstreiferhalterung vorbekannt. Diese Abstreiferhalterung weist den Nachteil auf, dass bei grossem Walzenspalt die Distanz zwischen einer an die unterste Mantellinie der oberen Walze gelegte waagrechte Tangentialebene und dem unteren Bereich des oberen Abstreifers zu klein wird, was beim Auswalzen eines dicken Teigbandes der Fall ist und der Teig dann an den oberen Abstreifern ansteht. Im weiteren weist die Vorrichtung den Nachteil auf, dass bei grossem Walzenspalt der Winkel der Abstreifmesser bezüglich der Mantelfläche der oberen Teigwalze zu steil und die Anpresskraft zu klein wird.

Es ist deshalb eine Aufgabe der vorliegenden Erfindung, eine Abstreifvorrichtung für Teigauswalzmaschinen und eine Teigauswalzmaschine mit Abstreifvorrichtungen zu schaffen, welche die obgenannten Nachteile nicht aufweisen. Insbesondere soll auch bei maximal geöffnetem Walzenspalt gewährleistet werden, dass genügend Durchlass für den Teig vorhanden ist und der Teig nicht an den oberen Abstreifern ansteht. Bei minimalem Walzenspalt soll der Winkel zwischen Abstreifmesser und Manteloberfläche der Teigwalze so sein, dass noch ein genügendes Abstreifen der Walze erfolgt. Dies wird erfindungsgemäss dadurch erzielt, dass das obere Verbindungsorgan in jeweils einer Nut mindestens zweier Hebel gelagert ist, wobei die Hebel jeweils an ihren von der oberen Teigwalze abgewandten Enden einen festen Drehpunkt und an ihren der oberen Teigwalze zugewandten Enden ein sich auf die Achse der oberen Teigwalze abstützendes Gleitorgan aufweisen. Bei einer Teigauswalzmaschine liegt erfindungsgemäss das an den beiden Enden der Hebel vorgesehene Gleitorgan auf der Achse der oberen Walze auf. Im folgenden werden anhand der beiliegenden Zeichnung Ausführungsbeispiele der Erfindung sowie deren Verwendung näher beschrieben. Es zeigen:

Fig. 1 eine bekannte Abstreiferhalterung,
Fig. 2 ein Ausführungsbeispiel der erfindungsgemässen Abstreiferhalterung bei maximaler Walzenöffnung,
Fig. 3 das Ausführungsbeispiel gemäss Fig. 2 bei minimaler Walzenöffnung.

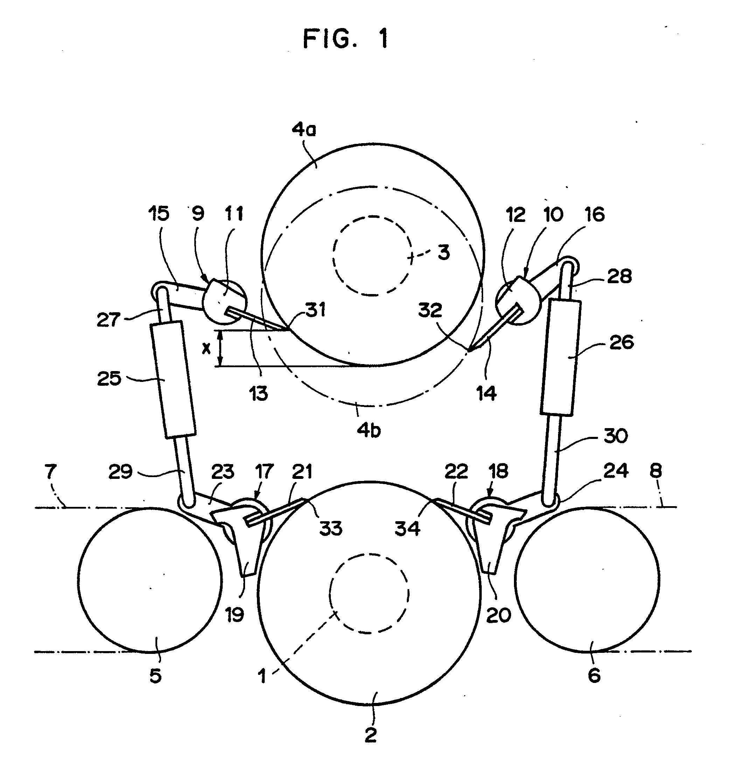

In Fig. 1 ist eine vorbekannte Abstreiferhalterung für eine Teigauswalzmaschine dargestellt. Von der Teigauswalzmaschine ist aus der Figur eine untere um eine feststehende Achse 1 drehbare Walze 2 sowie eine, um eine in der Höhe verstellbare Achse 3 drehbare obere Walze 4 ersichtlich. Weiterhin sind noch Bandantriebswalzen 5 und 6 zum Antrieb der Teigtransportbänder 7 und 8 dargestellt. An der Mantelfläche der oberen Walze 4 liegen zwei Abstreifer 9 und 10, an die je einen Rundstab 11 resp. 12 und ein in einem Längsschlitz dieser letzteren fest eingesetztes Abstreifmesser 13 resp. 14 umfassen. Mit den Rundstäben 11 resp. 12 ist je ein Arm 15 resp. 16 fest verbunden.

An der Mantelfläche der unteren Walze liegen zwei Abstreifer 17 und 18 an, die je einen Winkelstab 19 resp. 20 und ein Abstreifmesser 21 resp. 22 umfassen, wobei die Abstreifmesser je in einem Längschlitz der Winkelstäbe eingesetzt sind. Der Winkelstab 19, 20 jedes unteren Abstreifers 17, 18 ist mit je einem Arm 23 resp. 24 fest verbunden.

Die äusseren Enden der oberen Arme 15 und 16 sowie der unteren Arme 23 und 24 sind bei jedem Ende der beiden Walzen 2 und 4 durch eine Federvorrichtung 25 resp. 26 miteinander verbunden. Jede dieser Federvorrichtungen umfasst eine obere Stange 27 resp. 28, die an den Armen 15 resp. 16 angelenkt sind sowie je eine untere Stange 29 resp. 30, deren unteres Ende an den unteren Arm 23 resp. 24 angelenkt sind. In den Federvorrichtungen 25 und 26 befinden sich nicht dargestellte Druckfedern, welche die Arme 15, 16 sowie 23 und 24 mit Hilfe der oberen Stangen 27 und 28 sowie der unteren Stangen 29 und 30 in Richtung der Federvorrichtungen 25 und 26 ziehen. Die Rundstäbe 11 und 12 sowie die Winkelstäbe 19 und 20 bilden feste Drehachsen, um welche die Abstreifer gedreht werden, so dass die Abstreiferkanten 31, 32, 33 und 34 an den Mantelflächen der Walzen 2 und 4 anliegen. Im weiteren sind noch, wie in der CH-Patentschrift Nr. 408 827 beschrieben, beidseitig der unteren Walze Niederhalter für die unteren Abstreifer vorgesehen, die in der Fig. 1 nicht dargestellt sind. Die obere Walze 4 ist bezüglich der gemäss Fig. 1 linken Abstreifvorrichtung in einer oberen Stellung 4a und bezüglich der rechten Abstreifvorrichtung in einer unteren Stellung 4b dargestellt. Es ist ersichtlich, dass in der oberen Stellung der Walze 4a das Abstreifmesser 13 einen zu steilen Winkel mit der Manteloberfläche einschliesst, und die Federvorrichtung 25 zu stark entspannt wird, wodurch das Abstreifmesser 13 eine ungenügende Anpresskraft aufweist. In einer oberen Stellung der Walze 4a bei grossem Walzenspalt ist bei dieser bekannten Vorrichtung die Lage des Abstreifers 13 ebenfalls ungünstig, indem der Teig am Abstreifermesser 13 anstehen kann. Die Distanz x ist zu klein, wenn viel Teig abgewalzt wird.

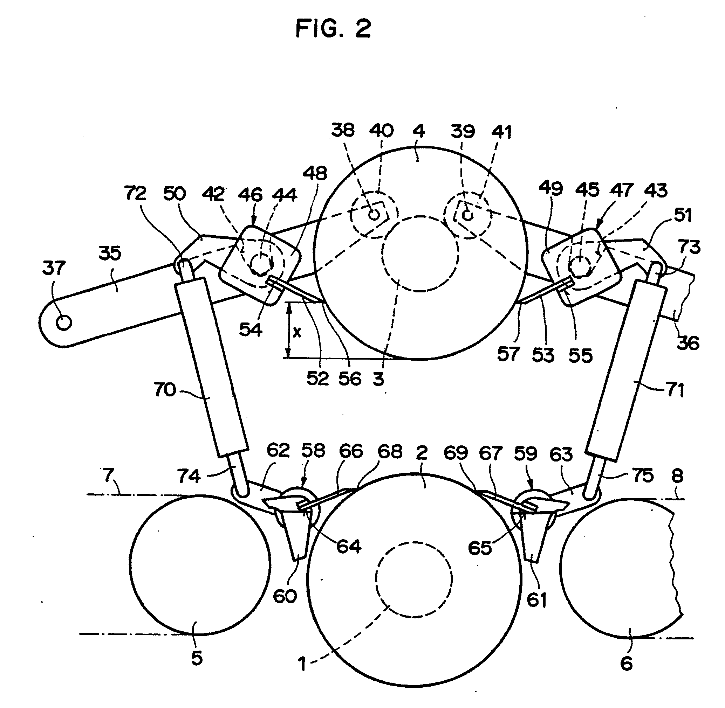

Aus Fig. 2 ist eine Seitenansicht eines erfindungsgemässen Ausführungsbeispieles der Abstreifvorrichtung für eine reversierende Teigauswalzmaschine dargestellt, und zwar in einer Ansicht von einem Seitenende der Teigwalzen her. Von der Teigauswalzmaschine sind die um eine feste Achse 1 drehbar gelagerte untere Teigwalze 2 sowie die um eine in der Höhe verstellbare Achse 3 drehbar gelagerte obere Teigwalze 4 dargestellt. Im weiteren sind die um die Bandantriebswalzen 5 und 6 geführten Teigtransportbänder 7 und 8 strichpunktiert dargestellt. Die Abstreifvorrichtungen sind beidseitig der Walzenpaare angeordnet. Beidseitig der oberen Walze 4 und an beiden Enden derselben sind um feste Drehpunkte drehbare Hebel 35 und 36 angeordnet. Lediglich beim gemäss Fig. 2 linken Hebel ist der Drehpunkt 37 dargestellt. In den vorderen, der Teigwalze zugekehrten Enden der Hebel 35 und 36 sind Achsen 38 und 39 vorgesehen, auf welchen drehbare oder feststehende Rollen 40 und 41 gelagert sind, die sich auf der Achse 3 der oberen Teigwalze 4 abstützen. Die Hebel weisen etwa in ihrem mittleren Bereich je eine Nut 42 resp. 43 auf, in welchen Nuten die Enden je eines Rundstabes 44 resp. 45 gelagert sind. Mit den Rundstäben 44 und 45 sind an deren Enden Abstreifer 46 und 47 verbunden. Die Abstreifer umfassen je ein Vierkant-Aluminiumprofil 48 resp. 49, einen mit dem Aluminiumprofil verbundenen Arm 50 resp. 51 sowie ein Abstreifmesser 52 resp. 53. Die Abstreifmesser 52 und 53 sind je in einem Längsschlitz 54 resp. 55 des Vierkant-Aluminiumprofils eingesetzt. Die Abstreifmesser liegen mit ihren vorderen Kanten 56 resp. 57 an der Mantelfläche der oberen Walze 4 an. Die Abstreifvorrichtungen 58 und 59 für die untere Teigwalze 2 umfassen je einen sich längs der unteren Walze 2 erstreckenden Winkelstab 60 resp. 61, einen Arm 62 resp. 63 und je ein in einem Längsschlitz 64 resp. 65 des Winkelstabes eingesetztes Abstreifmesser 66 resp. 67. Die Abstreifmesser 66 und 67 liegen mit ihren vorderen Abstreifkanten 68 und 69 an der Mantelfläche der unteren Teigwalze 2 an. Die Arme 50 resp. 51 der oberen Abstreifer 46 und 47 sind an ihren äusseren Enden mit den oberen Enden von mit je einer Federvorrichtung 70 und 71 zusammenwirkenden oberen Stangen 72 und 73 verbunden. Die Arme 62 und 63 der unteren Abstreifer 58 und 59 sind mit unteren Stangen 74 und 75 verbunden, welche ebenfalls mit den Federvorrichtungen 70 und 71 zusammenwirken. In den Federvorrichtungen 70 und 71 ist je eine Druckfeder angeordnet.

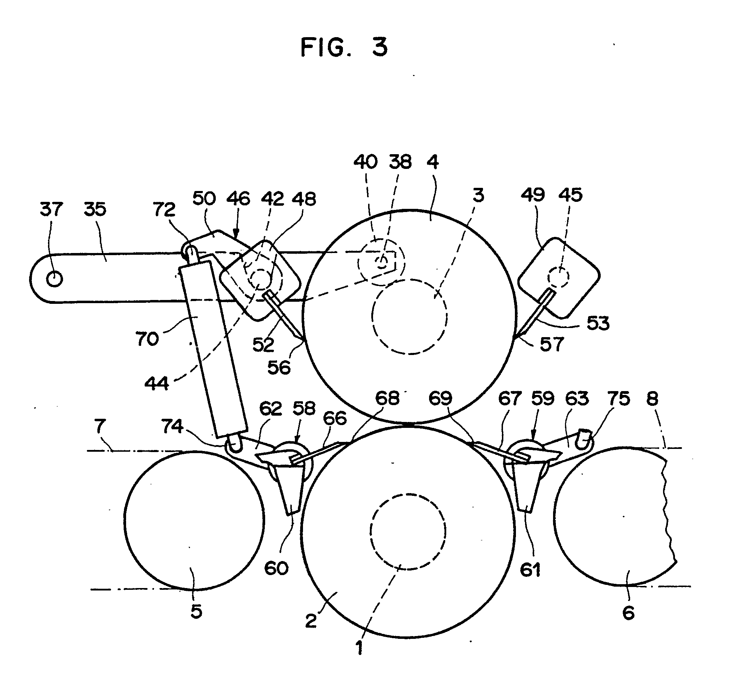

Im weiteren sind noch, wie in der CH-Patentschrift Nr. 408 827 beschrieben, beidseitig der unteren Walze Niederhalter für die unteren Abstreifer vorgesehen, die in den Fig. 2 und 3 jedoch nicht dargestellt sind.

In der Walzenstellung gemäss der Fig. 2 besteht zwischen den beiden Walzen 2 und 4 der maximale Walzenspalt. Wie aus derselben Figur ersichtlich ist, ist nun die Distanz x zwischen einer horizontalen Tangentialebene an die unterste Mantellinie der oberen Walze und dem unteren Ende der Abstreifer 46 und 47 wesentlich grösser als dies bei der bekannten Vorrichtung gemäss Fig. 1 der Fall ist. Bei der erfindungsgemässen Ausführungsform ist auch bei maximaler Oeffnung des Walzenspaltes genügend Durchlass für den Teig vorhanden.

Ebenso sind Anstellwinkel und Anpresskraft des Abstreifmessers korrekt.

Die Anpresskraft der Abstreifmesser ist in den verschiedenen Walzenstellungen weniger abweichend als bei der bekannten Vorrichtung gemäss Fig. 1.

Fig. 3 zeigt die Abstreiferanordnung bei minimalem Walzenspalt.

Bei einer nicht reversierenden Teiauswalzmaschine braucht nur auf der einen Seite der Teigwalzen eine Abstreifvorrichtung angeordnet zu sein.

**Patentansprüche**

1. Abstreifvorrichtung für Teigauswalzmaschinen mit mindestens einer Federvorrichtung (70, 71), welche an ihren Enden in Aktionsrichtung der Feder jeweils eine obere und eine untere Stange (72, 73, 74, 75) aufweist, die jeweils mit einem Arm (50, 51, 62, 63) eines oberen und unteren Abstreifers (46, 47, 58, 59) gelenkig verbunden ist, wobei die oberen und unteren Abstreifer jeweils ein oberes und unteres, eine Drehachse für die Abstreifer bildendes Verbindungsorgan (44, 45, 60, 61) und jeweils ein Abstreifmesser (52, 53, 66, 67) umfassen, dadurch gekennzeichnet, dass das obere Verbindungsorgan (44, 45) in jeweils einer Nut (42, 43) mindestens zweier Hebel (35, 36) gelagert ist, wobei die Hebel jeweils an ihren von der oberen Teigwalze (4) abgewandten Enden einen festen Drehpunkt (37) und an ihren der oberen Teigwalze zugewandten Enden ein sich auf die Achse der oberen Teigwalze abstützendes Gleitorgan (40, 41) aufweisen.

2. Abstreifvorrichtung nach Patentanspruch 1, dadurch gekennzeichnet, dass das Gleitorgan als auf einer im Endbereich des Hebels (35, 36) vorgesehenen Achse (38, 39) drehbar gelagerte oder feststehende Rolle (40, 41) ausgebildet ist.

3. Abstreifvorrichtung nach Patentanspruch 1 oder 2, gekennzeichnet durch höheneinstellbare und zur Ermöglichung der Wegnahme des Abstreifers ausser Wirkung bringbare Niederhalter.

4. Abstreifvorrichtung nach einem der vorangehenden Patentansprüche, dadurch gekennzeichnet, dass mindestens zwei im Abstand voneinander angeordnete Federvorrichtungen (70, 71) vorhanden sind.

5. Teigauswalzmaschine mit mindestens einer Abstreifvorrichtung gemäss Patentanspruch 1, 2, 3 oder 4, wobei eine um eine feste Achse (1) drehbare untere Teigwalze (2) und eine um eine in die Höhe verstellbare Achse (3) drehbare obere Teigwalze (4) vorgesehen sind, dadurch gekennzeichnet, dass das an den der Teigwalze (4) zugewandten Enden der Hebel (35, 36) vorgesehene Gleitorgan (40, 41) auf der Achse der oberen TeigWalze (4) aufliegt.

6. Teigauswalzmaschine nach Patentanspruch 5, dadurch gekennzeichnet, dass beidseitig der Teigwalzen (2, 4) eine Abstreifvorrichtung vorgesehen ist.

## Claims

1. Stripping device for dough sheeters with at least one spring device (70, 71) which, in the direction of the action of the spring, has at each of its ends an upper and a lower rod (72, 73, 74, 75) which are each flexibly connected with an arm (50, 51, 62, 63) of an upper and a lower stripper (46, 47, 58, 59), the upper and lower strippers each comprising an upper and lower connecting element (44, 45, 60, 61) forming a pivot for the strippers and a stripping knife (52, 53, 66, 67), characterized in that each upper connecting element (44, 45) is mounted in a groove (42, 43) at least of two levers (35, 36), the levers having a fixed fulcrum (37) at each of their ends remote from the upper dough roller (4) and a sliding element (40, 41) resting on the axis of the upper dough roller (40, 41) at the ends nearest the upper dough roller (4).

2. Stripping device according to claim 1, characterized in that the sliding element takes the form of a roller (40, 41) mounted pivotably or fixed on an axis (38, 39) provided in the end region of the lever (35, 36).

3. Stripping device according to claim 1 or 2, characterized by holding down devices which are vertically adjustable and can be brought to make it possible to remove the stripper from operation.

4. Stripping device according to one of the preceding patent claims, characterized in that at least two spring devices (70, 71) are provided and disposed at a distance from each other.

5. Dough sheeter with at least one stripper device according to claim 1, 2, 3 or 4, a lower dough roller (2) pivotable around a fixed axis (1) and an upper dough roller (4) pivotable around a vertically adjustable axis (3) being provided, characterized in that the sliding element (40, 41) provided at the ends of the levers (35, 36) closest to the dough roller (4), rests on the axis of the upper dough roller (4).

6. Dough sheeter according to claim 5, characterized in that a stripping device is provided on both sides of the dough rollers (2, 4).

## Revendications

1. Dispositif racleur pour appareil à rouler la pâte, comportant au moins un dispositif à ressort (70, 71) dont chacun présente à ses extrémités, dans la ligne d'action du ressort, une barre supérieure et une barre inférieure (72, 73, 74, 75), chaque barre étant liée par articulation avec le bras (50, 51, 62, 63) d'un racloir supérieur ou inférieur (46, 47, 58, 59), les racloirs supérieurs et inférieurs englobant chacun une lame de raclage (52, 53, 66, 67) et un organe de liaison (44, 45, 60, 61) qui forme un axe de rotation pour les racloirs, caractérisé en ce que chaque organe de liaison supérieur (44, 45) est engagé à la façon d'un palier dans une encoche (42, 43) pratiquée respectivement dans l'un et dans l'autre de deux leviers (35, 36) qui présentent chacun un point de pivotement fixe (37) à leur extrémité opposée au rouleau de bobinage de pâte supérieur (4), tandis que, à leur extrémité tournée vers le rouleau de bobinage de pâte supérieur (4), ces leviers (35, 36) présentent un organe de glissement suiveur (40, 41).

2. Dispositif racleur selon la revendication 1, caractérisé en ce que l'organe de glissement suiveur est formé en tant que roulette (40, 41), fixe ou montée de façon pivotante, sur un axe (38, 39) prévu dans l'extrémité du levier (35, 36).

3. Dispositif racleur selon la revendication 1 ou 2, caractérisé par des serre-flans réglables en hauteur et qui peuvent être mis hors fonction pour permettre l'enlèvement du racloir.

4. Dispositif racleur selon l'une des revendications précédentes, caractérisé en ce qu'au moins deux dispositifs à ressort (70, 71) sont prévus, disposés à distance l'un de l'autre.

5. Machine à rouler la pâte comprenant au moins un dispositif racleur selon la revendication 1, 2, 3 ou 4, dans laquelle sont prévus un rouleau de bobinage de pâte inférieur (2) tournant autour d'un axe fixe (1) et un rouleau de bobinage de pâte supérieur (4) tournant autour d'un axe (3) réglable en hauteur, caractérisée en ce que les organes de glissement suiveurs (40, 41) à l'extrémité des leviers (35, 36) tournée vers le rouleau de bobinage de pâte (4), sont en appui sur l'axe du rouleau de bobinage de pâte supérieur (4).

6. Machine à rouler la pâte selon la revendication 5, caractérisée en ce qu'un dispositif de raclage est prévu des deux côtés des rouleaux de bobinage de pâte (2, 4).

# FIG. 1

# FIG. 2

# FIG. 3